# EUROPEAN PATENT APPLICATION

(11) **EP 2 205 041 A1**
(43) Date of publication of application: **07.07.2010**
(21) Application number: 08022526.1
(22) Date of filing: 30.12.2008
(51) Int. Cl.: H05B 3/20, F24D 13/02

(54) **Thermal electric converter**

(71) Applicant: TIERRA OBRAS Y PIEDRAS, S.L., 08006 Barcelona (ES)
(72) Inventor: Reyes, Jose, Luis, Lopez, 08006 Barcelona (ES)
(74) Representative: Torras Toll, Jorge

(57) **Abstract**

Thermal electric converter of the type used in superficial thermal treatments of fixed structures or continuous processes at low temperatures, and for temperature treatment systems in closed spaces, essentially **characterized in that** it consists of a surface of a good electricity-conducting material with good caloric transmission capacity (1), folded upon itself in a zigzag pattern one or more times, thus forming several overlapping planes, which is disposed between two outer isolating surfaces (2) of a material with high thermal transmission capacity, medium or low electrical isolation capacity and medium or high mechanical resistance, disposing an inner isolating surface (3) with the same electro-thermal characteristics as the outer isolating surfaces (2) between each of the overlapping planes of the conducting band (i), the whole assembly being solidarised by means of an adhesive (4), preferably inert, at the device's service temperatures.

## Description

### TECHNICAL FIELD OF THE INVENTION

The present invention, as expressed in the wording of this specification, relates to a thermal electric converter, of the type used in superficial thermal treatments of fixed structures or continuous processes at low temperatures, and for temperature treatment systems in closed spaces.

### BACKGROUND OF THE INVENTION

Devices commonly known as radiant heating surfaces are generally used for the thermal treatment of structures, processes or closed spaces which, installed in floors, walls or other surfaces, have the purpose of generating heat to raise the temperature of the treated element.

Traditionally, an installation of this type is based either on the use of a static or circulating hot fluid through pipes or similar, or on the use of electric resistances.

Basically, there are two types of radiant installations: via water pipe or via heating cable.

The most usual method is via water pipe; this requires a network of pipes which is mainly installed underneath the heating surface, through which a fluid heated to a temperature higher than that of the room, which for example in the case of a home heating installation will have a minimum gradation of 34°C and maximum of 46°C, generally produced by a boiler; in this manner we obtain a room temperature of 18°C to 32°C. In any case, the water transfers heat to the surface, which in turn is transferred to the treated space or element. In the case of heating systems, these pipes are expensive because they must be unbreakable in order to support the high service temperatures, winter frosts, the presence and accumulation of lime and the corrosion caused by wear.

Devices of this kind, for radiant floors, are described in some patents such as, for example, those with publication number 1064643, 1053189 or 0236930. Likewise, there is a device, described under publication number 8407187, based on heat-absorbing meltable material which circulates through adequate pipes, particularly for radiant walls. Heating cable-based radiant systems use direct electrical energy to heat a resistance, normally a stainless steel cable integrated in the thermal exchange surface; heating cable is frequently used in radiant installations in which floors and walls are heated simultaneously.

All of these types of radiant installations have a low calorific performance that implies a high energy cost.

At the same time, they are difficult to control, hindering precision thermal treatments, as they have great thermal inertia. Specifically, a parameter difficult to control and intervene is the temperature increase per unit time, due to which, if a process requires that a certain temperature differential be reached in an exact period of time, the deviations that could occur therein would be almost impossible to control.

Other unfavourable aspects are derived from the presence of a fluid circulating through pipes. Mainly, the risk of loss of liquid, the high heat gradient of the pipes (with the deterioration implied for the materials located next to these), the need for complicated systems to regulate the flow of the liquid towards the different areas of the room, and the practical impossibility of achieving a homogeneous caloric radiation throughout the exchange surface when it is of considerable size.

Heating cable heating has the inconvenience of also producing a high heat gradient around said cables (with the deterioration that this also implies for the materials located next to these).

On the other hand, a superficial thermal treatment, of the kind applied, for example, to fixed structures or materials subject to continuous processes, has the purpose of conferring certain physiochemical properties such as greater mechanical resistance, anticorrosive properties or other to the treated surfaces.

Treatments of this kind are described in some patents, such as, for example, that with publication number 2027408 (in which a superficial thermal treatment for aluminium alloys at more than 300°C is described), number 2041587 (in which a superficial optical glass polishing treatment with LASER radiation is described), or number 0222180 (in which a superficial chemical-thermal treatment for ferrous and cupric materials at 75°C is described).

All of these treatments have a number of inconveniences; that described in publication number 2027408 is a high-temperature treatment (over 300°C), with all the risks that it implies; that described in number 2041587 requires the use of a LASER, which is expensive and dangerous; finally, that described in number 0222180 is a chemical treatment, with the risks derived from the use of chemical products; all of these also have in common that their manipulation by specialized personnel in each case is essential.

### DESCRIPTION OF THE INVENTION

In general terms, the present invention relates to a new type of thermal electric converter, usable in applications such as the implementation of heating radiant surfaces to control temperatures in closed areas, or such as superficial thermal treatments or in continuous processes, that improve the possibilities of control and the caloric performance of any of the systems described in the state of the art.

Applied to radiant surface systems, the new converter has low thermal inertia and does not require any type of fluids circulating through pipes nor any type of heating cables, with which extraordinary precision and control is obtained in the temperature elevation or reduction phases, and there is no risk of fluid leaks or need to use complex flow regulation systems, in addition to eliminating the risk of high temperature gradients.

Applied in superficial thermal treatments, whether on fixed structures or materials subject to determined continuous processes, the new converter has the advantage of being applicable at low temperatures and does not require the use of sophisticated devices (such as LASER) or the use of chemical products.

Additionally, the new device achieves superior performance in the conversion of electrical energy into caloric radiation, and can be fed indistinctly with alternate or continuous current, with the voltages determined by the adequate intrinsic security levels for each specific application.

The new device essentially consists of a band or surface of a good electricity-conducting material and with good caloric transmission capacity, which folds upon itself in a zigzag pattern one or more times, disposed between the two outer isolating surfaces of a material with high thermal transmission capacity, medium or low electrical isolating capacity and medium or high mechanical resistance, disposing an inner isolating surface (one for each fold of the conducting band) with the same electro-thermal characteristics as the outer isolating surfaces between each of the folded planes of the conducting band, the whole assembly being solidarised by means of an inert glue or adhesive at the device's service temperatures.

Preferably, the number of folded and overlapping planes of the conducting material surface shall be even, in such a manner that the number resulting from the magnetic field generated on either side of the converter shall be 0.

The fact that the heat-generating element is a surface and not a cable or liquid conductor implies that the temperature at any point of the converter surface shall be identical, not requiring a high heat gradient. At the same time, the fact that this surface folds upon itself exponentially multiplies its heat-generating capacity, given that each fold plane thermally feeds back the adjoining planes, as if we overlapped several electrical resistances en bloc, but with a very inferior final thickness.

### DESCRIPTION OF THE DRAWINGS

For the purpose of illustrating the foregoing description, a set of drawings in accordance with a solely explanatory and unlimitative preferred embodiment of the practical possibilities of the invention has been included as an integral part of this specification, in which the following figures have been represented in a simplified and schematic manner:

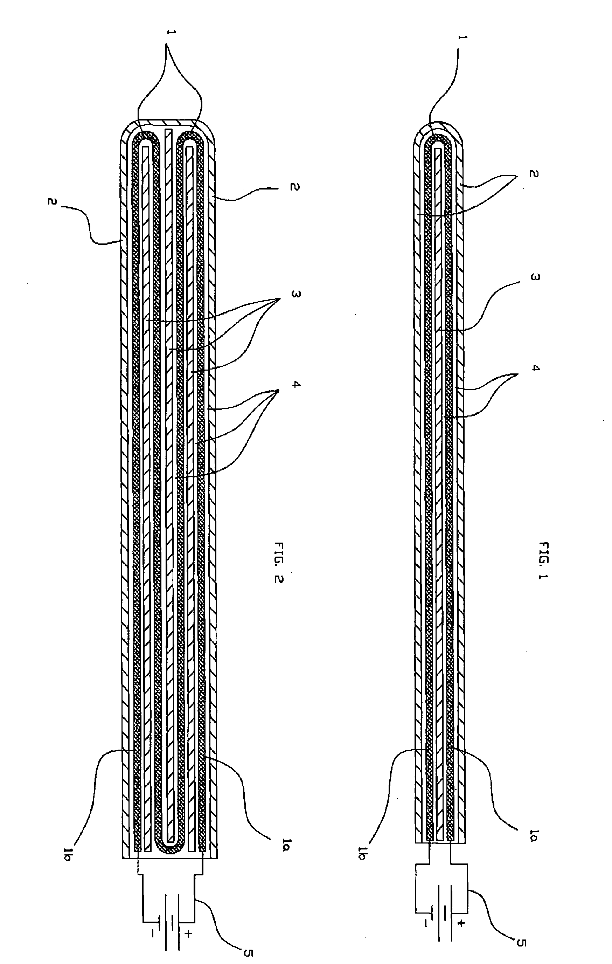

- Fig. 1: shows a sectional view where the basic structure of the new electro-thermal converter can be observed;
- Fig. 2: shows a sectional view where the structure of the new electro-thermal converter can be observed in a version with three folds of the electricity-conducting surface;

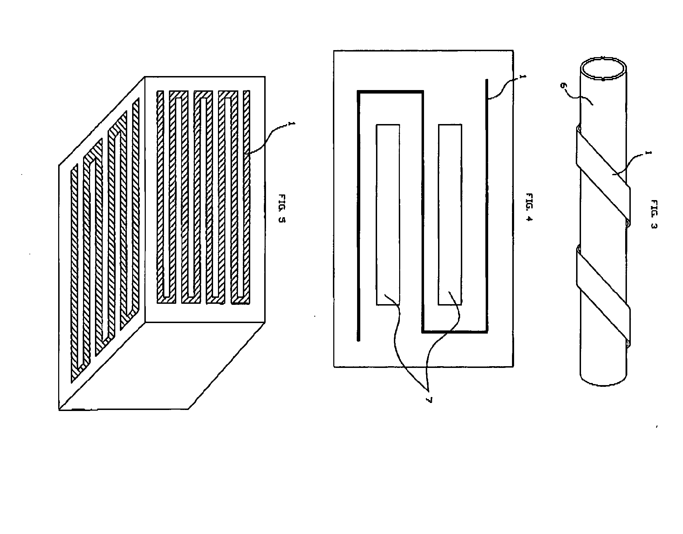

- Fig. 3: shows a view of the new converter spirally twisted around a pipe to which a superficial thermal treatment is applied;
- Fig. 4: shows a view of the new converter, applied to the continuous process of a superficial thermal treatment; and

- Fig. 5: shows the new device, applied to the thermal treatment of a closed space.

### DESCRIPTION OF A PRACTICAL EXAMPLE

The new device consists of a surface of an electricity-conducting material with good caloric transmission capacity (1), folded upon itself in zigzag one or more times, thus forming several overlapping planes, which is disposed between the two outer isolating surfaces (2) of a material with high thermal transmission capacity, medium or low electrical isolation capacity and medium or high mechanical resistance, disposing an inner isolating surface (3) with the same electro-thermal characteristics as the outer isolating surfaces (2) between each of the overlapping planes of the conducting band (1), the whole assembly being solidarised by means of a film of inert glue (4) at the device's service temperatures.

In the first and last plane of the conducting surface folded in a zigzag pattern (1a and 1b), electrical terminals (5) are disposed for connection to a power supply.

The device is applied directly to the surface of the fixed structure (6) or continuous process of a treated material (7).

In the event of being used as a radiant surface, it is indistinctly applied in horizontal or vertical planes, covered by the adequate materials.

The materials used to manufacture the different elements that comprise it shall be independent of the object of the present invention, in addition to the shapes, dimensions and accessories thereof, which can be replaced by other, technically equivalent ones, provided that these do not affect its essentiality or digress from the scope defined in the claims section.

Having established the expressed concept, below we have set out the claims note, thereby synthesizing the newness being claimed:

## Claims

1. Thermal electric converter of the type used in superficial thermal treatments of fixed structures or continuous processes at low temperatures, and for temperature treatment systems in closed spaces, essentially **characterized in that** it consists of a surface of a good electricity-conducting material with good caloric transmission capacity (1), folded upon itself in a zigzag pattern one or more times, thus forming several overlapping planes, which is disposed between two outer isolating surfaces (2) of a material with high thermal transmission capacity, medium or low electrical isolation capacity and medium or high mechanical resistance, disposing an inner isolating surface (3) with the same electro-thermal characteristics as the outer isolating surfaces (2) between each of the overlapping planes of the conducting band (1), the whole assembly being solidarised by means of an adhesive (4), preferably inert, at the device's service temperatures.

2. Thermal electric converter, according to the preceding claim, **characterized in that** the first and last plane of the conducting surface, folded in a zigzag pattern (1a and 1b), have electrical terminals (5) for connection to a power supply.
